# EUROPEAN PATENT APPLICATION

(11) **EP 4 835 339 A1**
(43) Date of publication of application: **04.11.2026**
(21) Application number: 25847069.9
(22) Date of filing: 30.07.2025
(51) Int. Cl.: F16L 37/244, F16L 37/36

(54) **FLUID CONNECTOR, MALE END STRUCTURE, AND FEMALE END STRUCTURE**

(30) Priority: 31.07.2024 CN 202411048371
(71) Applicant: Shenzhen Envicool Intelligent Connection Technology Co., Ltd., Shenzhen, Guangdong 518000 (CN)
(72) Inventor: CHEN, Gang, Shenzhen, Guangdong 518000 (CN); JIANG, Fang, Shenzhen, Guangdong 518000 (CN); MEI, Cailian, Shenzhen, Guangdong 518000 (CN)
(74) Representative: Nordmeyer, Philipp Werner
(86) International application number: PCT/CN2025/111355
(87) International publication number: WO 2026/026822

(57) **Abstract**

A fluid connector, comprising a male end structure (1) provided with a male end channel (1-1), and a female end structure (2) provided with a female end channel (2-1). The male end structure (1) is rotatably snap-fitted to the female end structure (2) by means of engaging protrusions (3) and engaging shoulders (4); an assembly slot (2-2) is provided on the mating side of the female end structure (2); an insertion portion (1-2) configured to be inserted into the assembly slot (2-2) along the rotation axis of the engaging protrusions (3) is provided on the mating side of the male end structure (1); the end face of the insertion portion (1-2) is provided with a male end mating port (1-3) of the male end channel (1-1), the slot bottom of the assembly slot (2-2) is provided with a female end mating port (2-3) of the female end channel (2-1), and the male end mating port (1-3) is used for mating with the female end mating port (2-3); and at least one of the engaging protrusions (3) is a first engaging protrusion (3-1) provided at the edge of the insertion portion (1-2), and at least one of the engaging shoulders (4) is a first engaging shoulder (4-1) provided on the slot wall of the assembly slot (2-2) to match the first engaging protrusion (3-1). The fluid connector can solve the problem that the size of the fluid connector is too large.

## Description

The present application claims priority to Chinese Patent Application No. 202411048371.7, titled "FLUID CONNECTOR, MALE END STRUCTURE, AND FEMALE END STRUCTURE", filed on July 31, 2024 with the China National Intellectual Property Administration, which is incorporated herein by reference in its entirety.

### FIELD

The present application relates to the technical field of channel connection, and in particular to a fluid connector, a male structure for the fluid connector, and a female structure for the fluid connector.

### BACKGROUND

A fluid connector typically includes a coupling end and a mating end that mate with each other. The coupling end and the mating end may have identical or different structures. When disconnected, the coupling end and the mating end are each sealed independently to shut off a fluid source, thereby preventing fluid leakage and spurting. When the coupling end and the mating end are engaged, valve core structures within them are opened to allow fluid communication between the coupling end and mating end. The fluid connector may be used for connection between a fluid source and a fluid heat sink, and specifically, may serve as an interface connecting the fluid source to various heat sinks, so as to remove heat through fluid circulation, thereby achieving efficient heat dissipation.

During the implementation of the present application, it is found that at least the following issues exist in the conventional technology.

There is still room for optimization in the structure of current fluid connectors. For example, the current fluid connectors are still relatively large in size.

### SUMMARY

In view of this, a first object of the present application is to provide a fluid connector, which can effectively address the issue of an excessively large size of fluid connectors. A second object of the present application is to provide a male structure for the fluid connector. Further, a third object of the present application is to provide a female structure for the fluid connector.

In order to achieve the first object, the following technical solutions are provided according to the present application.

A fluid connector includes a male structure having a male channel and a female structure having a female channel. The male structure and the female structure form rotational bayonet engagement via retaining lugs and retaining shoulders. The female structure is provided on its mating side with an assembly recess, and the male structure is provided on its mating side with an insertion part configured to be inserted into the assembly recess along a rotational axis of the retaining lug. A male mating port of the male channel is provided at an end face of the insertion part, and a female mating port of the female channel is provided at a recess bottom of the assembly recess, and the male mating port is configured to engage with the female mating port. The retaining lugs include at least one first retaining lug arranged at a peripheral portion of the insertion part, and the retaining shoulders include at least one first retaining shoulder arranged on a recess wall of the assembly recess to cooperate with the first retaining lug.

When the fluid connector is in use, after the insertion part is inserted into the assembly recess, the first retaining lug is located on a side faced by a retaining surface of the first retaining shoulder. Subsequently, as the male structure and the female structure rotate relative to each other, primarily involving the relative rotation between their respective valve seats, the first retaining lug and the first retaining shoulder move relative to each other in a circumferential direction to complete rotational bayonet engagement. The fluid connector has at least one set of the retaining lug and the retaining shoulder in the rotational bayonet engagement provided at the peripheral surface of the insertion part and the recess wall of the assembly recess, respectively. Since the first retaining lug or the first retaining shoulder is arranged at the peripheral portion of the insertion part, it is directly supported by the insertion part without being supported via a shank, and there is no need to provide a groove for the shank to pass through, thereby achieving a reduced circumferential dimension. In summary, the fluid connector can effectively address the issue of an excessively large size of fluid connectors.

In some technical solutions, the male structure is provided with a male valve element and a male actuator. The female structure is provided with a female valve element and a female actuator. The male actuator is configured to actuate the female valve element to open or close the female channel of the female structure during rotational bayonet engagement, and the female actuator is configured to actuate the male valve element to open or close the male channel of the male structure during the rotational bayonet engagement.

In some technical solutions, the retaining lugs include at least one second retaining lug arranged on the male actuator, and the retaining shoulders include at least one second shoulder arranged on the female structure to cooperate with the second retaining lug.

Additionally/or alternatively, the retaining lugs include at least one third retaining lug arranged on the female actuator, and the retaining shoulders include at least one third shoulder arranged on the male structure to cooperate with the third retaining lug.

In some technical solutions, at least two first retaining lugs are arranged on the insertion part, and lines connecting the two first retaining lugs and the second retaining lug define an acute triangle.

In some technical solutions, the female structure is provided with a first guide entrance for guiding the second retaining lug to move to the second shoulder, and the first guide entrance is arranged adjacent to the female actuator. The male structure is provided with a second guide entrance for guiding the third retaining lug to move to the third shoulder, and the second guide entrance is arranged adjacent to the male actuator.

In some technical solutions, the male actuator is arranged closer to a rotational axis of the first retaining lug than the first retaining lug. The female actuator and the male actuator are arranged at equal distances from the rotational axis of the first retaining lug. A clearance zone and a male clearance slot are provided at a side of the insertion part to allow movement of the female actuator. A female clearance slot is provided at the recess bottom of the assembly recess to allow movement of the male actuator.

In some technical solutions, the male structure includes a male valve seat, and the male valve element is rotatably arranged at the male valve seat. The male valve seat includes the insertion part and the male actuator. The female structure includes a female valve seat, and the female valve element is rotatably arranged at the female valve seat. The female valve seat includes the assembly recess and the female actuator.

In some technical solutions, the male valve seat includes a male body and a male valve cover, and the male valve element is arranged between the male valve cover and the male valve cover. The male body and the male valve cover are engaged with each other and positioned circumferentially by a male positioning protrusion and a male positioning groove.

The female valve seat includes a female body and a female valve cover, and the female valve element is arranged between the female valve cover and the female body. The female body and the female valve cover are engaged with each other and positioned circumferentially by a female positioning protrusion and a female positioning groove.

In some technical solutions, a peripheral surface of the male valve element is positioned adjacent to the male positioning protrusion. A peripheral surface of the female valve element is positioned adjacent to the female positioning protrusion.

In some technical solutions, the male valve cover has a male mating recess, and the male positioning groove is provided in a recess wall of the male mating recess and extends to an end face of the male valve cover. The male valve element is fitted into the male mating recess. The male body has a male boss received in the male mating recess, and the male positioning protrusion is arranged to axially protrude beyond the male boss.

The female valve cover has a female mating recess, and the female positioning groove is provided in a recess wall of the female mating recess and extends to an end face of the female valve cover. The female valve element is fitted into the female mating recess. The female body has a female boss received in the female mating recess, and the female positioning protrusion is arranged to axially protrude beyond the female boss.

In some technical solutions, the male valve element has a male mounting groove at each of its two end faces to receive a sealing ring, and each male mounting groove is open at the peripheral surface of the male valve element.

The female valve element has a female mounting groove at each of its two end faces to receive a sealing ring, and each female mounting groove is open at the peripheral surface of the female valve element.

In some technical solutions, the assembly recess and the female mating recess are located at opposite ends of the female valve cover. An arc-shaped retaining groove is provided in the recess wall of the assembly recess, and a side groove wall surface of the arc-shaped retaining groove away from the recess bottom of the assembly recess serves as the first retaining shoulder. A guide groove is provided in the recess wall of the assembly recess to guide the first retaining lug into the arc-shaped retaining groove. The female clearance slot is provided at the recess bottom of the assembly recess, and the female clearance slot is arcuate.

In some technical solutions, the insertion part and the male mating recess are located at opposite ends of the male valve cover. The male clearance slot extends through the recess bottom of the male mating recess to a side where the insertion part is located, and the male clearance slot is arcuate. The male clearance slot and the insertion part are arranged side-by-side transversely. A clearance zone is provided at a side of the insertion part so as to allow the female actuator to extend into the male clearance slot.

To achieve the second object, a male structure for a fluid connector is further provided according to the present application, including a male valve seat for mating with a female structure. The male valve seat is provided with an insertion part for fitting into an assembly recess of the female structure. The insertion part is provided on its outer side surface with a retaining lug, which protrudes radially outward for rotational bayonet engagement with a corresponding retaining shoulder located on the assembly recess. The insertion part is provided in its mating end face with a male mating port, which is configured to engage with a female mating port of the female structure. In other words, the retaining lug is arranged at a peripheral portion of the insertion part having the mating port. Since the fluid connector has the above technical effects, the male structure for the fluid connector should also have corresponding technical effects.

To achieve the third object, a female structure for the fluid connector is further provided according to the present application, including a female valve seat for mating with a male structure. The female valve seat is provided with an assembly recess for receiving the insertion part of the male structure. The assembly recess is provided on its recess wall with a retaining shoulder, which faces a recess bottom of the assembly recess for rotational bayonet engagement with a corresponding retaining lug of the insertion part. The assembly recess is provided at the recess bottom with a female mating port, which is configured to engage with a male mating port of the male structure. In other words, the recess wall of the assembly recess further has a retaining shoulder facing the recess bottom of the assembly recess. Since the fluid connector has the above technical effects, the female structure for the fluid connector should also have corresponding technical effects.

### BRIEF DESCRIPTION OF THE DRAWINGS

In order to more clearly illustrate the technical solutions in the embodiments of the present application or in the conventional technology, the accompanying drawings required for describing the embodiments or the conventional technology will be briefly introduced below. Obviously, the accompanying drawings described below only show some embodiments of the present application. Based on these accompanying drawings, other accompanying drawings may be obtained by those ordinary skilled in the art without any creative effort.
FIG. 1 is a structural schematic view of a male structure according to an embodiment of the present application;
FIG. 2 is a structural schematic view of a female structure according to an embodiment of the present application;
FIG. 3 is a structural schematic view of a fluid connector according to an embodiment of the present application;
FIG. 4 is an exploded structural schematic view of the male structure according to the embodiment of the present application;
FIG. 5 is an exploded structural schematic view of the female structure according to the embodiment of the present application;
FIG. 6 is an exploded structural schematic view of the fluid connector according to the embodiment of the present application;
FIG. 7 is a structural schematic view of a mating end of the male structure according to the embodiment of the present application;
FIG. 8 is a structural schematic view of a mating end of the female structure according to the embodiment of the present application;
FIG. 9 is a structural schematic view of a female valve element according to an embodiment of the present application;
FIG. 10 is a schematic cross-sectional view of the fluid connector according to the embodiment of the present application;
FIG. 11 is a schematic view showing a regional division of the male structure according to the embodiment of the present application; and
FIG. 12 is a schematic view showing a regional division of the female structure according to the embodiment of the present application.

Numeral references are listed as follows:
1. male structure; 2. female structure; 3. retaining lug; 4. retaining shoulder;
1-1. male channel; 1-2. insertion part; 1-3. male mating port; 1-4. male valve element; 1-5. male actuator; 1-6. second guide entrance; 1-7. male clearance slot; 1-8. male valve seat; 1-9. clearance zone;
2-1. female channel; 2-2. assembly recess; 2-3. female mating port; 2-4. female valve element; 2-5. female actuator; 2-6. first guide entrance; 2-7. female clearance slot; 2-8. female valve seat; 2-9. arc-shaped retaining groove; 2-10. guide groove;
3-1. first retaining lug; 3-2. second retaining lug; 3-3. third retaining lug;
4-1. first retaining shoulder;
1-81. male body; 1-82. male valve cover; 1-83. male positioning protrusion; 1-86. male boss;
2-81. female body; 2-82. female valve cover; 2-83. female positioning protrusion; 2-84. female positioning groove; 2-85. female mating recess; 2-86. female boss;
1-41. male mounting groove; 2-41. female mounting groove;
100. central region; 200. first outer annular region; 300. second outer annular region;

Double-dot lines in the drawings serve as auxiliary lines to separate the central region, the first outer annular region, and the second outer annular region.

### DETAILED DESCRIPTION OF THE EMBODIMENTS

A fluid connector is disclosed according to an embodiment of the present application, which can effectively address the issue of excessively large size of fluid connectors.

The technical solutions in the embodiments of the present application will be described clearly and completely below with reference to the accompanying drawings herein. Apparently, the described embodiments are merely some, rather than all, of the embodiments of the present application. Based on the embodiments of the present application, any other embodiments obtained by those ordinary skilled in the art without any creative effort shall fall within the protection scope of the present application.

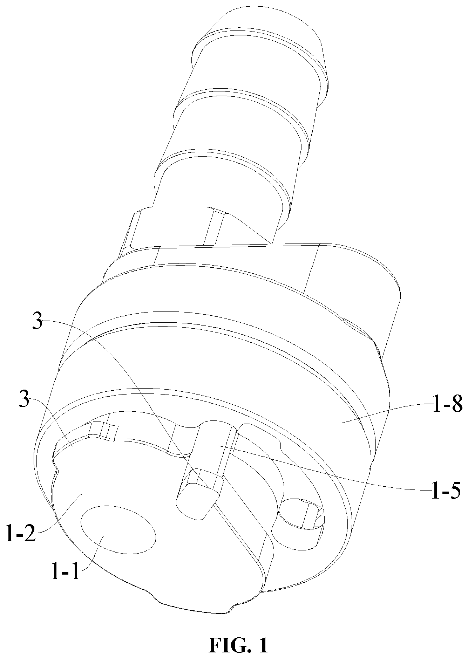

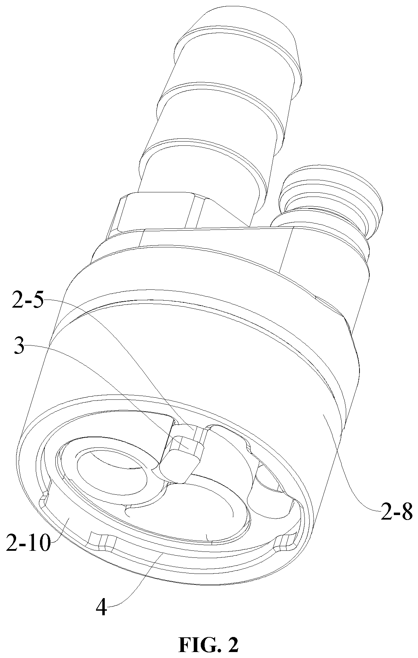

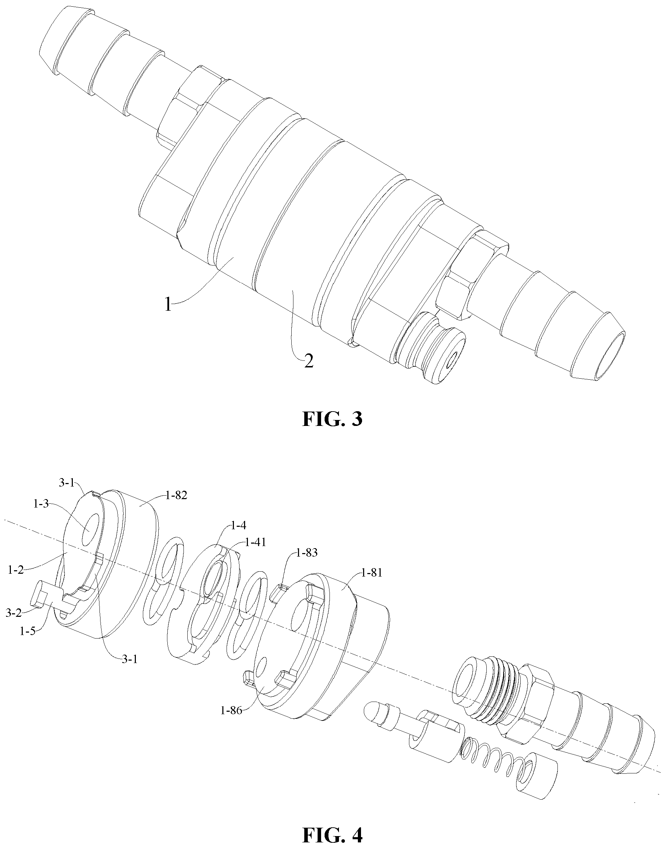

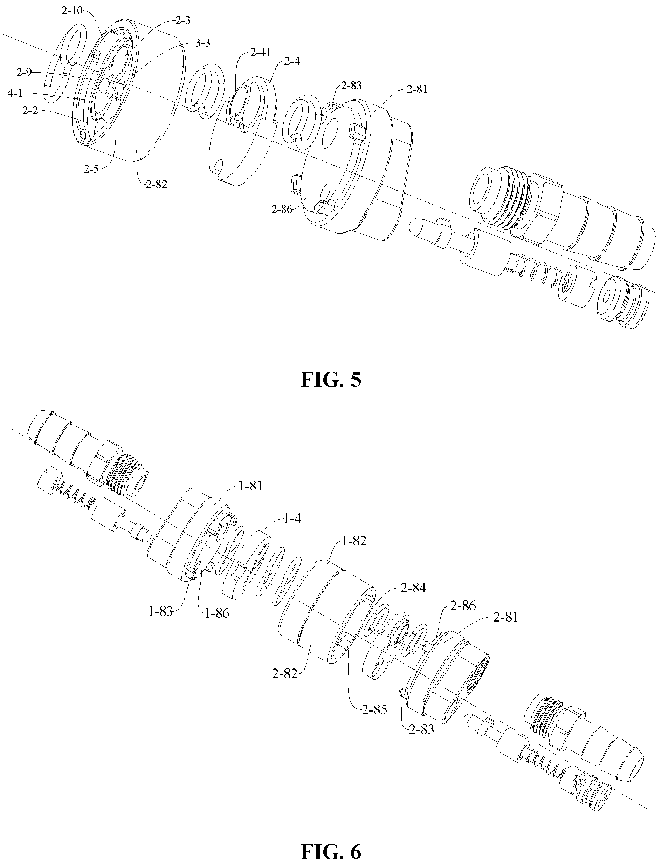

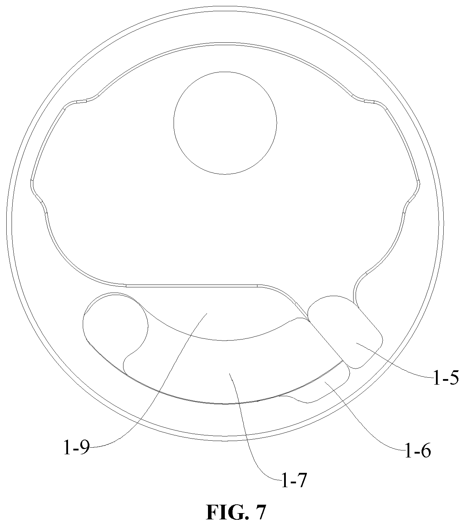

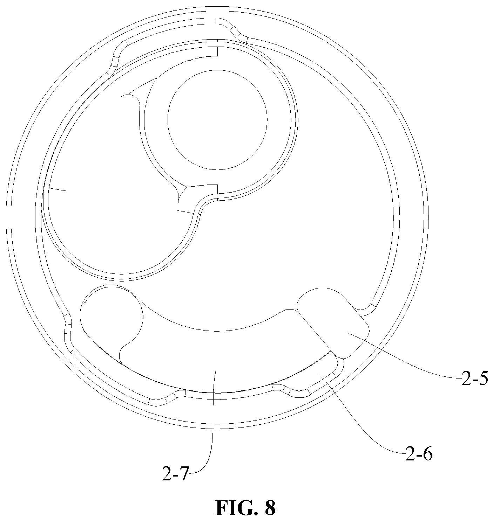

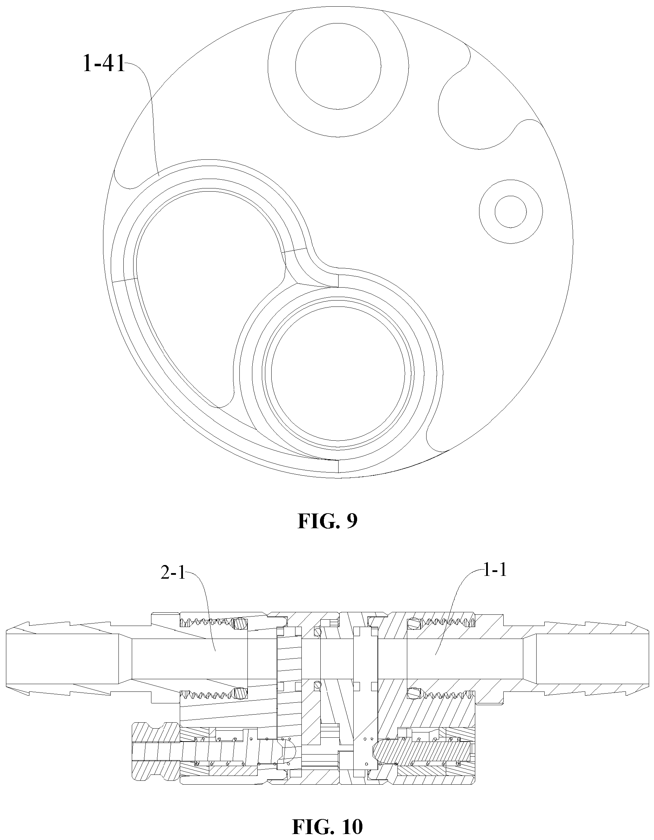

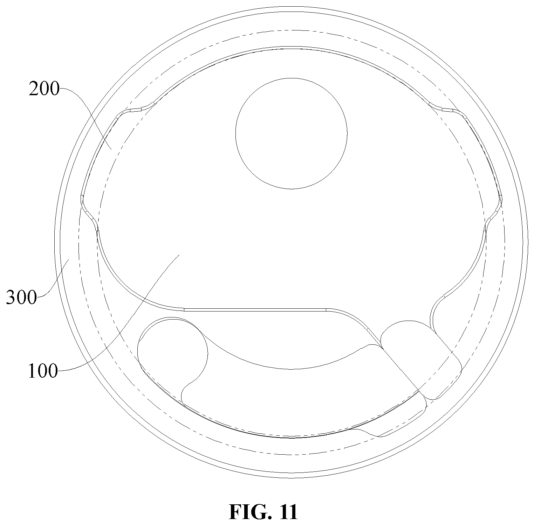

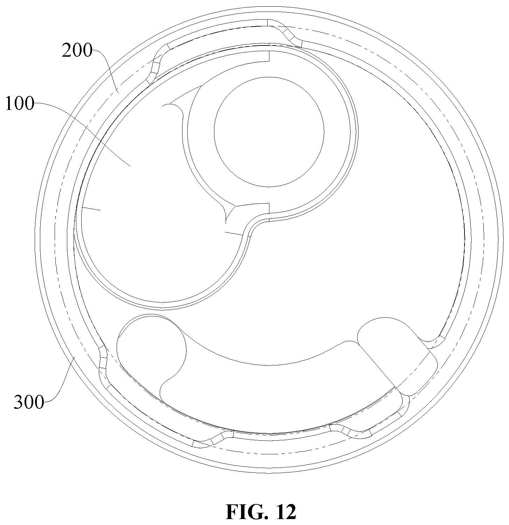

Referring to FIGS. 1 to 12, FIG. 1 is a structural schematic view of a male structure according to an embodiment of the present application; FIG. 2 is a structural schematic view of a female structure according to an embodiment of the present application; FIG. 3 is a structural schematic view of a fluid connector according to an embodiment of the present application; FIG. 4 is an exploded structural schematic view of the male structure according to an embodiment of the present application; FIG. 5 is an exploded structural schematic view of the female structure according to the embodiment of the present application; FIG. 6 is an exploded structural schematic view of the fluid connector according to the embodiment of the present application; FIG. 7 is a structural schematic view of a mating end of the male structure according to the embodiment of the present application; FIG. 8 is a structural schematic view of a mating end of the female structure according to the embodiment of the present application; FIG. 9 is a structural schematic view of a female valve element according to an embodiment of the present application; FIG. 10 is a schematic sectional view of the fluid connector according to the embodiment of the present application; FIG. 11 is a schematic view showing regional division of the male structure according to the embodiment of the present application; and FIG. 12 is a schematic view showing a regional division of the female structure according to the embodiment of the present application.

In some embodiments, a connector is provided, including two coupling ends that are configured to be interlocked with each other. In order to facilitate interlocking connection, a mating side of each coupling end is mainly divided into a central region 100 and a peripheral region. The central region 100 is circular, and a communication channel needs to be arranged on one side of an axis, and the communication channel needs to be spaced apart from an edge of the central region 100 to accommodate a sealing ring. Moreover, in the peripheral region, two arcuate slots are provided, and an actuating part is arranged between the adjacent arcuate slots. The actuating part is provided at its end with a protrusion protruding radially outward to serve as a retaining lug 3. The retaining lug 3 of one coupling end is received in a retaining groove of the other coupling end. An inner groove wall of the retaining groove serves as a retaining shoulder 4, which is configured to abut against the retaining lug 3 to complete rotational bayonet engagement. Specifically, the retaining groove extends in a circumferential direction, with an enlarged entrance formed at an initial end thereof, allowing the actuating part and the retaining lug 3 thereon to pass through the enlarged entrance such that the retaining lug 3 is positioned on a back side of the retaining groove. At a terminal end of the retaining groove, the retaining groove has a groove width that is adapted to a shank of the actuating part, so that the actuating part may move toward the terminal end until the retaining lug 3 abuts against the back side of the retaining groove, preventing axial disengagement between the them and thereby achieving axial retention.

There is still room for optimization in the structure of the coupling ends of this type of connectors to achieve a smaller size, for example, a smaller radial dimension.

In some embodiments, a fluid connector is provided, including two coupling end structures, which are, for example, a male structure 1 and a female structure 2, respectively. The male structure 1 and the female structure 2 are plug-connected to each other on their mating sides via an insertion part 1-2 and an assembly recess 2-2, and the communication channels of the male structure 1 and the female structure 2 are connected to each other at a top of the insertion part 1-2 and a recess bottom of the assembly recess 2-2. In this case, at least one set of the retaining lug 3 and the retaining shoulder 4 for rotational bayonet engagement may be respectively arranged at a peripheral surface of the insertion part 1-2 and a recess wall of the assembly recess 2-2. Since the retaining lug 3 or the retaining shoulder 4 is arranged at the peripheral portion of the insertion part 1-2, it is directly supported by the insertion part 1-2 without being supported via the shank, and there is no need to provide a groove for the shank to pass through, thereby achieving a reduced circumferential dimension.

In some embodiments, in order to facilitate the description of structural features, regional division is made theoretically rather than physically based on dimensional and positional relationships. Specifically, primarily centered on a rotational axis of the rotational bayonet engagement, a central region 100, a first outer annular region 200 and a second outer annular region 300 are sequentially and contiguously defined in a radial direction. The central region 100 is configured to mainly provide a male channel 1-1 and a female channel 2-1, as well as necessary area for adjacent sealing rings, thereby forming a compact circular structure. The first retaining lug 3-1 and the first retaining shoulder 4-1 may be arranged in the first outer annular region 200, and a radial width of the first outer annular region 200 is determined by a required contact width between the first retaining lug 3-1 and the first retaining shoulder 4-1. Further, the entire outer wall part may be arranged in the second outer annular region 300, or there may be no entire outer wall part arranged if necessary. It should be noted that in the context, the division of the central region 100, the first outer annular region 200 and the second outer annular region 300 is merely intended to facilitate a better understanding of the positional relationship among some structures in the present application, rather than to denote a physical division, and is used only for understanding the structural positional relationship.

In some embodiments, since the male structure 1 and the female structure 2 respectively have the insertion part 1-2 and the assembly recess 2-2, the first retaining lug 3-1 and the first retaining shoulder 4-1 located in the first outer annular region 200 may be supported by the insertion part 1-2 and the assembly recess 2-2. Consequently, it is possible to effectively eliminate the need to provide a third outer annular region between the first outer annular region 200 and the central region 100 for accommodating a connecting shank and a groove structure mating with the connecting shank. The connecting shank is configured to provide the retaining lug 3. Instead, by forming the insertion part 1-2 and the assembly recess 2-2 in the central region 100, the first retaining lug 3-1 is directly mounted on a radial side of the insertion part 1-2, and the first retaining shoulder 4-1 is arranged on the recess wall of the assembly recess 2-2, eliminating the need for a connecting shank. Consequently, the third outer annular region may be omitted.

In some embodiments, the second outer annular region 300 may be omitted, meaning there is no need for the outer wall part. In this case, the first retaining shoulder 4-1 is supported by other solid structures in the second outer annular region 300. Since a circumferential distribution of the first retaining shoulder 4-1 is generally not more than 180 degrees, sufficient remaining space is available for arranging such solid structures to provide axial support. In this way, valve elements may only be arranged in the central region 100. In this scenario, a male actuator 1-5 on the male structure 1 may only be arranged in the central region 100, and/or a female actuator 2-5 on the female structure 2 may only be arranged in the central region 100. Of course, if necessary, both the male actuator 1-5 and the female actuator 2-5 may be arranged in the first outer annular region 200.

In some embodiments, of course, the second outer annular region 300 may be provided. When the second outer annular region 300 is included, the valve element (the male valve element 1-4 and/or the female valve element 2-4) may expand into the first outer annular region 200, or may remain only within the central region 100. When the valve element (the male valve element 1-4 and/or the female valve element 2-4) expands into the first outer annular region 200, the male actuator 1-5 on the male structure 1 may be arranged in the central region 100 and/or the first outer annular region 200. Similarly, the female actuator 2-5 on the female structure 2 may be arranged in the central region 100 and/or the first outer annular region 200. Arrangement in the central region 100 and the first outer annular region 200 means one portion is located in the central region 100 while another portion is located in the first outer annular region 200. Additionally, each of the male actuator 1-5 on the male structure 1 and the female actuator 2-5 on the female structure 2 may be provided with the retaining lug 3. In this case, the retaining lug 3 may be arranged in one, multiple or all of the central region 100, the first outer annular region 200 and the second outer annular region 300. When arranged in multiple or all regions, the retaining lug 3 generally extends across these regions.

In some embodiments, the male structure 1 is correspondingly provided with a male channel 1-1, and the female structure 2 is correspondingly provided with a female channel 2-1.The male structure 1 and the female structure 2 form rotational bayonet engagement via a retaining lug 3 and a retaining shoulder 4, so as to secure them together in a mating direction to achieve axial retention. At least one protrusion 3 is a first retaining lug 3-1 arranged at the peripheral portion of the insertion part 1-2, and at least one shoulder 4 is a first retaining shoulder 4-1 arranged on the recess wall of the assembly recess 2-2 to cooperate with the first retaining lug 3-1. It should be noted that the male structure 1 and the female structure 2 may form rotational bayonet engagement via one or multiple sets of the retaining lugs 3 and the retaining shoulders 4. The term "at least one" indicates that: when only one set is provided, this set of the retaining lug 3 and the retaining shoulder 4 serves as the first retaining lug 3-1 and the first retaining shoulder 4-1; whereas when multiple sets are provided, one or more sets of the retaining lugs 3 and the retaining shoulders 4 may serve as the first retaining lug(s) 3-1 and the first retaining shoulder(s) 4-1, with "multiple sets" referring to either all or some of the sets.

In some embodiments, a male mating port 1-3 of the male channel 1-1 is formed at an end face of the insertion part 1-2, and a female mating port 2-3 of the female channel 2-1 is formed at the recess bottom of the assembly recess 2-2. The male mating port 1-3 is configured to engage with the female mating port 2-3. When a top surface of the insertion part 1-2 abuts against the recess bottom of the assembly recess 2-2, the female mating port 2-3 and the male mating port 1-3 may be engaged to each other, thereby achieving communication between the male channel 1-1 and the female channel 2-1. It should be noted that the male mating port 1-3 may be a port of a communication hole in a male valve element 1-4 or a port of a communication channel in a male valve seat 1-8. Correspondingly, the female mating port 2-3 may be a port of a communication hole in a female valve element 2-4 or a port of a communication channel in a female valve seat 2-8. When the male valve element 1-4 is exposed at the top of the insertion part 1-2, an end of a communication hole in the male valve element 1-4 serves as the male mating port 1-3. Conversely, when the male valve element 1-4 is not exposed at the top of the insertion part 1-2, there is a communication channel at the top of the insertion part 1-2, and an end of the communication channel serves as the male mating port 1-3. Correspondingly, when the female valve element 2-4 is exposed at the recess bottom of the assembly recess 2-2, an end of a communication hole in the female valve element 2-4 acts as the female mating port 2-3. Conversely, when the female valve element 2-4 is not exposed at the recess bottom of the assembly recess 2-2, there is a female channel 2-1 at the recess bottom of the assembly recess, and an end of the female channel 2-1 acts as the female mating port 2-3.

In some embodiments, generally, the male structure 1 is provided with a male valve element 1-4, which is movable to open or close the male channel 1-1 in the male structure 1. Correspondingly, the female structure 2 is provided with a female valve element 2-4, which is movable to open or close the female channel 2-1 in the female structure 2. The male structure 1 is provided with a male actuator 1-5, which is configured to drive the female valve element 2-4 to move. The female structure 2 is provided with a female actuator 2-5, which is configured to drive the male valve element 1-4 to move. The specific positions of these actuators may be determined as required.

In some embodiments, the actuation of the male actuator 1-5 and the female actuator 2-5 may be performed independently or through the rotational bayonet engagement between the first retaining lug 3-1 and the first retaining shoulder 4-1. Specifically, during the rotational bayonet engagement process, the female valve element 2-4 may be driven by the male actuator 1-5 to move to open or close the female channel 2-1 in the female structure 2, and the male valve element 1-4 may be driven by the female actuator 2-5 to move to open or close the male channel 1-1 in the male structure 1.

It should be noted that the rotational bayonet engagement process may at least include an axial movement phase and a circumferential movement phase. In the axial movement phase, during which the insertion part 1-2 is inserted into the assembly recess 2-2, the first retaining lug 3-1 and the first retaining shoulder 4-1 move relative to each other until axially aligned with each other. In the circumferential movement phase, the first retaining lug 3-1 and the first retaining shoulder 4-1 move circumferentially relative to each other about the rotational axis, so as to shift from a state where they are circumferentially offset from each other to a state where they are circumferentially overlapped with each other, thereby achieving axial abutment and position-limiting. It should be noted that the actuation of the male actuator 1-5 driving the female valve element 2-4 to open or close the female channel 2-1 in the female structure 2, and the actuation of the female actuator 2-5 driving the male valve element 1-4 to open or close the male channel 1-1 in the male structure 1, may be performed synchronously or sequentially. For either of the aforementioned actuations, it may occur during the axial movement phase or the circumferential movement phase. As shown in the figures, it occurs during the circumferential movement phase.

In some embodiments, the rotational bayonet engagement process may be performed as follows. After the insertion part 1-2 is inserted into the assembly recess 2-2, the first retaining lug 3-1 is located on the side faced by a retaining surface of the first retaining shoulder 4-1, Subsequently, as the male structure 1 and the female structure 2 rotate relative to each other, primarily involving the relative rotation between their respective valve seats, the first retaining lug 3-1 and the first retaining shoulder 4-1 move relative to each other in the circumferential direction. After the insertion part 1-2 is inserted into the assembly recess 2-2, the top of the insertion part 1-2 may abut against the recess bottom of the assembly recess 2-2 to prevent further movement, or other structures may be adopted to simultaneously or independently limit the movement. Taking the female valve seat 2-8 of the female structure 2 as a static reference, the corresponding male actuator 1-5 moves synchronously with the first retaining lug 3-1. The female valve element 2-4 is driven by the male actuator 1-5 to move, typically in a direction to open the female valve element 2-4, until the female valve element 2-4 is fully opened. At this point, the rotational bayonet engagement between the first retaining lug 3-1 and the first retaining shoulder 4-1 is completed. Conversely, taking the male valve seat 1-8 of the male structure 1 as a static reference, the corresponding first retaining shoulder 4-1 moves synchronously with the female actuator 2-5. The male valve element 1-4 is driven by the female actuator 2-5 to move, typically in a direction to open the male valve element 1-4, until the male valve element 1-4 is fully opened. At this point, the rotational bayonet engagement between the first retaining lug 3-1 and the first retaining shoulder 4-1 is also completed.

In some embodiments, the male actuator 1-5 may be provided with a second retaining lug 3-2 for rotational bayonet engagement with a corresponding second shoulder 4 on the female valve seat 2-8 while driving the female valve element 2-4. The second retaining lug 3-2 may protrude radially outward, or radially towards the axis, i.e., radially inward. Similarly, the female actuator 2-5 may be provided with a third retaining lug 3-3 for rotational bayonet engagement with a corresponding second shoulder 4 on the male valve seat 1-8 while driving the male valve element 1-4. The third retaining lug 3-3 may protrude radially outward, or radially inward towards the axis. By achieving rotational bayonet engagement via both the male actuator 1-5 and the female actuator 2-5, in combination with the rotational bayonet engagement between the first retaining lug 3-1 and the first retaining shoulder 4-1, a multi-point load-bearing configuration is established to ensure a more uniform axial force distribution, thereby guaranteeing reliable axial retention effect.

In some embodiments, the female actuator 2-5 and the male actuator 1-5 both move in a rotational manner, whereas the movement of the male valve element 1-4 and the female valve element 2-4 relative to their respective valve seats is not strictly restricted to a rotational movement. Even in the case of a rotational movement, a rotational axis of the valve element may be coincident with, parallel to, or perpendicular to the rotational axis of the first retaining lug 3-1. In the case of a coincident positional relationship, the actuator is directly engaged with the corresponding valve element, for example, the actuator is directly inserted into a drive slot of the valve element for direct actuation. For other positional relationships, a transmission structure may be employed to establish a transmission connection between the actuator and the corresponding valve element.

In some embodiments, regarding the arrangement relationship of the male actuator 1-5 and the female actuator 2-5, accurately speaking, the male actuator 1-5 may be arranged on the first retaining lug 3-1. Specifically, the male actuator 1-5 may be overlapped with or offset from the first retaining lug 3-1 in the circumferential direction, and amplitude of the offset should be limited to prevent mechanical interference. When the male actuator 1-5 is arranged on the first retaining lug 3-1, a distance between the male actuator 1-5 and the rotational axis of the first retaining lug 3-1 is equal to a distance between the first retaining lug 3-1 and its own rotational axis. The female actuator 2-5 may be arranged at a position corresponding to the first retaining shoulder 4-1 and located on a mating end face. For instance, the female valve seat 2-8 may be provided with a stopper; a side surface of the stopper closer to the recess bottom of the assembly recess 2-2 serves as the first retaining shoulder 4-1, and a side surface of the stopper away from the recess bottom of the assembly recess 2-2 is provided with the female actuator 2-5. In this case, a distance between the female actuator 2-5 and the rotational axis of the first retaining lug 3-1 is equal to a distance between the first retaining shoulder 4-1 and the rotational axis of the first retaining lug 3-1. It should be noted that the first retaining shoulder 4-1 is engaged with the first retaining lug 3-1, and generally there are multiple sets of first retaining shoulders 4-1 and first retaining lugs 3-1 that are respectively engaged. Different sets of the first retaining shoulders 4-1 and the first retaining lugs 3-1 may be located on different circumferences. For the same set of the first retaining shoulder 4-1 and the first retaining lug 3-1, the distance between the first retaining lug 3-1 and its rotational axis should be equal to a distance between the first retaining shoulder 4-1 and the rotational axis of the first retaining lug 3-1 to ensure the rotational bayonet engagement between the first retaining lug 3-1 and the first retaining shoulder 4-1. In the context of specific embodiments, unless otherwise specified, each set of the first retaining shoulder 4-1 and the first retaining lug 3-1 may be considered to be arranged on the same circumference to further minimize the radial dimension.

In some embodiments, each of the male actuator 1-5 and the female actuator 2-5 may be arranged in a circular region enclosed by an outer periphery of the insertion part 1-2. For example, the distance between the male actuator 1-5 and the rotational axis of the first retaining lug 3-1 is smaller than the distance between the first retaining lug 3-1 and its rotational axis. Correspondingly, the distance between the female actuator 2-5 and the rotational axis of the first retaining lug 3-1 is equal to the distance between the male actuator 1-5 and the rotational axis of the first retaining lug 3-1, meaning that the female actuator 2-5 and the male actuator 1-5 are located on the same circumference. This not only achieves clearance, but also allows arrangement of another retaining lug on each of the male actuator 1-5 and the female actuator 2-5 that is located on the same circumference as the first retaining lug 3-1, thereby facilitating enhanced bayonet engagement.

As mentioned above, in order to facilitate the optimal arrangement of the actuator, specifically, a clearance zone 1-9 may be provided at one side of the insertion part 1-2 to avoid the female actuator 2-5, facilitating the female actuator 2-5 to move relative to the male valve seat 1-8. Additionally, a male clearance slot 1-7 is formed in the clearance zone 1-9, enabling the female actuator 2-5 to extend into the male valve element 1-4 and thereby drive the male valve element 1-4 to open or close. Correspondingly, a female-end clearance slot 2-7 is formed at the recess bottom of the assembly recess 2-2 to allow the male actuator 1-5 to pass through and extend into the female valve element 2-4, thereby enabling it to drive the female valve element 2-4 to open or close. It should be noted that when the second retaining lug 3-2 and the third retaining lug 3-3 are arranged, a second guide entrance 1-6 is formed at one end of the clearance zone 1-9 to receive and guide the third retaining lug 3-3. Correspondingly, a first guide entrance 2-6 is formed at one end of the female clearance slot 2-7 to receive and guide the second retaining lug 3-2.

In some embodiments, the male structure 1 includes a male valve seat 1-8, and the male valve element 1-4 is rotatably arranged on the male valve seat 1-8. The male valve seat 1-8 includes the insertion part 1-2 and the male actuator 1-5. The female structure 2 includes a female valve seat 2-8, and the female valve element 2-4 is rotatably arranged on the female valve seat 2-8. The female valve seat 2-8 includes the assembly recess 2-2 and the female actuator 2-5.

In some embodiments, the male valve seat 1-8 of the male structure 1 is typically composed of at least two structural components to facilitate the mounting of the male valve element 1-4. For example, the male valve seat 1-8 at least includes a male body 1-81 and a male valve cover 1-82, and the male valve element 1-4 is arranged between the male body 1-81 and the male valve cover 1-82. The male body 1-81 and the male valve seat 1-8 are fixedly connected to each other by for example riveting, welding and screw connection. To ensure the fixed connection between the male body 1-81 and the male valve seat 1-8, an outer radius of the male valve element 1-4 may be no greater than the distance between a radial outer rim of the first retaining lug 3-1 and its rotational axis. For instance, the male valve element 1-4 may be arranged in the central region 100, with the outer radius of the male valve element 1-4 equal to a radius of a circumscribed circle at the outer periphery of the insertion part 1-2. Alternatively, the outer radius of the male valve element 1-4 may be equal to the distance between the radial outer rim of the first retaining lug 3-1 and its rotational axis.

Correspondingly, the female valve seat 2-8 at least includes a female body 2-81 and a female valve cover 2-82, and the female valve element 2-4 is arranged between the female body 2-81 and the female valve cover 2-82. The female body 2-81 and the female valve seat 2-8 are fixedly connected to each other by for example riveting, welding and screw connection. To ensure the fixed connection between the female body 2-81 and the female valve seat 2-8, an outer radius of the female valve element 2-4 may be no greater than the distance between the first retaining shoulder 4-1 and its rotational axis. For instance, the female valve element 2-4 may be arranged in the central region 100, with its outer radius equal to a radius of a circumscribed circle at the outer periphery of the insertion part 1-2. Alternatively, the outer radius of the female valve element 2-4 may be equal to the distance between the radial outer rim of the first retaining lug 3-1 and its rotational axis.

Generally, a mounting groove is further required at each of the male valve element 1-4 and the female valve element 2-4 to mount a corresponding sealing ring. The mounting groove is located at a peripheral portion of the valve element and may be devoid of a groove wall to expose a side of the sealing ring. However, since the exposed area is minimal, the functionality of the sealing ring is not affected during use. Alternatively, the mounting groove may be formed in the valve seat, for example in a valve seat body and the valve cover. As a further alternative, the mounting groove is formed in each of the valve seat and the valve element, so that a portion of the sealing ring is embedded in the mounting groove of the valve element, and another portion is embedded in the mounting groove of the valve seat.

In some embodiments, for the valve seat, the body and the valve cover require circumferential alignment to ensure that the communication hole in the valve element may be aligned with the communication channel in the valve seat body during subsequent assembly. For enhanced positioning, the valve seat body and the valve cover are preferably connected via a pluggable engagement between a positioning protrusion and a corresponding positioning groove in the rotational axis direction of the first retaining lug 3-1 to achieve positioning. A set of the positioning protrusion and the positioning groove cooperating with each other are respectively provided on the body and the valve cover. When multiple positioning protrusions are arranged, they may all be arranged on the body or the valve cover, or alternatively, they are respectively arranged on the body and the valve cover. The positioning grooves are arranged corresponding to the positioning protrusions, respectively. As shown in the figures, four positioning protrusions are evenly arranged at a peripheral edge of the body in the circumferential direction, and four positioning grooves are correspondingly formed in the valve cover. It is preferable that a distance between an inner side surface of each positioning protrusion and the rotational axis of the first retaining lug 3-1 is equal to a radius of the valve element.

Specifically, for instance, the male body 1-81 and the male valve cover 1-82 are engaged with each other and positioned circumferentially by a male positioning protrusion 1-83 and a male positioning groove. Similarly, the female body 2-81 and the female valve cover 2-82 are engaged with each other and positioned circumferentially by a female positioning protrusion 2-83 and a female positioning groove 2-84.

In some embodiments, the peripheral surface of the male valve element 1-4 may be positioned adjacent to the male positioning protrusion 1-83. Similarly, the peripheral surface of the valve element may be positioned adjacent to the female positioning protrusion 2-83.

In some embodiments, a mating recess is formed on a side of the valve cover facing the body to accommodate the valve element, whereas a boss is arranged on a side of the body facing the valve cover, and the boss is received in the mating recess and is configured to extend into the mating recess to clamp the valve element together with a recess bottom of the mating recess. The positioning protrusion is provided at a peripheral surface of the boss, for example, four positioning protrusions are evenly arranged at the peripheral surface of the boss. For the female valve seat 2-8, a female mating recess 2-85 and the assembly recess 2-2 are coaxially arranged, and it is preferable that they have the same diameter, for example, and both are arranged in the central region 100.

In some embodiments, the male valve cover 1-82 may be formed with a male mating recess, and a recess wall of the male mating recess is formed with the male positioning groove and is configured to extend to an end face. The male valve element 1-4 is matched with and mounted in the male mating recess. The male body 1-81 has a male boss 1-86 located in the male mating recess, and the male positioning protrusion 1-83 is axially protruded beyond the male boss 1-86.

Additionally/alternatively, the female valve cover 2-82 is formed with a female mating recess 2-85, and a recess wall of the female mating recess 2-85 is formed with a female positioning groove 2-84 and is configured to extend to an end face. The female valve element 2-4 is matched with and mounted in the female mating recess 2-85. The female body 2-81 has a female boss 2-86 located in the female mating recess 2-85, and the female positioning protrusion 2-83 is axially protruded beyond the female boss 2-86.

In some embodiments, the male valve cover 1-82 and the male body 1-81 may be fixed together by welding. Alternatively, fixation between them may be achieved by an interference fit between the male positioning groove and the male protrusion, or by an interference fit between the male boss 1-86 and the male mating recess.

Additionally/alternatively, the female valve cover 2-82 and the female body 2-81 may be fixed together by welding. Alternatively, fixation between them may be achieved by an interference fit between the female positioning groove 2-84 and the female protrusion, or by an interference fit between the female boss 2-86 and the female mating recess 2-85.

In some embodiments, the assembly recess 2-2 and the female mating recess 2-85 may be located at opposite ends of the female valve cover 2-82. An arc-shaped retaining groove 2-9 is formed in the recess wall of the assembly recess 2-2, and a side groove wall surface of the arc-shaped retaining groove 2-9 away from the recess bottom of the assembly recess 2-2 serves as the first retaining shoulder 4-1. A guide groove 2-10 is formed in the recess wall of the assembly recess 2-2 to guide the first retaining lug 3-1 into the arc-shaped retaining groove 2-9. The arcuate female clearance slot 2-7 extends through the recess bottom of the assembly recess 2-2 to the female mating recess 2-85, and the female clearance slot 2-7 is arcuate.

Additionally/alternatively, the insertion part 1-2 and the male mating recess are located at opposite ends of the male valve cover 1-82. An arcuate male clearance slot 1-7 is formed at a recess bottom of the male mating recess and is configured to extend to the side where the insertion part 1-2 is located. The male clearance slot 1-7 and the insertion part 1-2 are transversely arranged side-by-side, and the clearance zone 1-9 is formed at one side of the insertion part 1-2 to allow the female actuator 2-5 to extend into the male clearance slot 1-7.

In some embodiments, generally speaking, the sealing between the valve element and the valve seat may be achieved by a figure-8-shaped sealing ring in addition to a sealing gasket, and the corresponding assembly recess 2-2 is preferably figure-8-shaped. One ring section of the sealing ring is arranged coaxially with the communication hole in the valve element. When the valve element is rotated to a closed state, the communication hole in the valve element is misaligned with the communication channel, at which point the communication channel is arranged coaxially with the other ring section of the sealing ring. During rotation of the valve element, the transition from misalignment to alignment between the communication hole and the communication channel occur within an interior of the outermost ring section of the sealing ring, thereby maintaining a continuous seal during relative rotation between the communication hole and the communication channel. Correspondingly, a sealing ring may also be employed between the two valve seats, specifically between an end of the insertion part 1-2 and the recess bottom of the assembly recess 2-2 for sealing, for example adopting the same structure as the sealing ring at the valve element.

In some embodiments, the male valve element 1-4 has a male mounting groove 1-41 at each of its two end faces to receive the sealing ring, and each male mounting groove 1-41 is open at the peripheral surface of the male valve element 1-4. The female valve element 2-4 has a female mounting groove 2-41 at each of its two end faces to receive the sealing ring, and each female mounting groove 2-41 is open at the peripheral surface of the female valve element 2-4. By configuring the mounting groove for the sealing ring to be open at the peripheral surface of the valve element, that is, eliminating a groove wall to form an open configuration, the sealing ring with larger cross-section may be mounted when the outer diameter of the valve element is limited, thereby achieving superior sealing effect. The corresponding sealing ring may include an outer arc segment, which is preferably arranged coaxially with the rotational axis of the rotational bayonet engagement. In this case, a groove segment of the mounting groove for receiving the outer arc segment is devoid of an outer side groove wall, creating an open configuration. Specifically, the sealing ring may include an outer arc segment and an inner arc segment that are coaxially arranged. Both ends of the outer arc segment and the inner arc segment are connected respectively by semi-circular arc segments. One of these semi-circular arc segments is defined as a first arc segment arranged coaxially with the communication hole in the valve element, and the other semi-circular arc segment is defined as a second arc segment arranged coaxially with the communication channel in the valve seat when the valve element is closed. To achieve a better communication effect when the valve element is opened, it is preferable that the sealing ring further includes a middle arc segment which is combined with the first arc segment to form a circular sealing section. The circular sealing section is arranged coaxially with the communication hole in the valve element.

In some embodiments, the first retaining lug 3-1 is rotatably engaged with the first retaining shoulder 4-1. The structures of the first retaining lug 3-1 and the first retaining shoulder 4-1 may be the same or different, and may be specifically configured as required. For instance, when they are both protruding structures, the first retaining shoulder 4-1 and the first retaining lug 3-1 are circumferentially offset from each other. In this arrangement, the first retaining shoulder 4-1 and the first retaining lug 3-1 may move relative to each other in the axial direction, allowing the first retaining lug 3-1 to be located on the side faced by the first retaining shoulder 4-1, that is, closer to the recess bottom. Subsequently, rotation is performed to axially align the first retaining shoulder 4-1 and the first retaining lug 3-1, enabling them to abut against each other in the axial direction and preventing reverse movement.

In some embodiments, for convenience, an arc-shaped retaining groove 2-9 may be formed at the first retaining lug 3-1 or the first retaining shoulder 4-1, and one side wall of the arc-shaped retaining groove 2-9 forms the first retaining lug 3-1 or the first retaining shoulder 4-1. As shown in the figures, a first retaining lug 3-1 in the shape of a tooth or a block is provided at the peripheral portion of the insertion part 1-2, and a recess wall of the assembly recess 2-2 is formed with an arc-shaped retaining groove 2-9, and a groove wall surface of the arc-shaped retaining groove 2-9 closer to an opening of the assembly recess 2-2 serves as the first retaining shoulder 4-1. Additionally, a guide groove 2-10 is formed at an end of the arc-shaped retaining groove 2-9, and is generally configured to receive and guide the first retaining lug 3-1. This ensures that when the insertion part 1-2 is inserted into the assembly recess 2-2, the first retaining lug 3-1 is located at the opening of the assembly recess 2-2 and aligned with the guide groove 2-10. As the insertion part 1-2 enters the assembly recess 2-2, the first retaining lug 3-1 moves into the guide groove 2-10 until it aligns with the arc-shaped retaining groove 2-9 in the axial direction. Subsequently, the insertion part 1-2 is rotated to move the first retaining lug 3-1 into the arc-shaped retaining groove 2-9. As the bayonet engagement is completed, the valve element is fully opened. At this time, the male mating port 1-3 and the female mating port 2-3 are engaged with each other, typically directly or indirectly via a sealing ring. It should be noted that one or more first retaining lugs 3-1 may be provided, such as two, three, or even more first retaining lugs 3-1.

In some embodiments, it is preferred that at least two first retaining lugs 3-1 are provided. If the male actuator 1-5 is provided with a second retaining lug 3-2, the lines connecting the second retaining lug 3-2 and the two first retaining lugs 3-1 define an acute triangle, which ensures that a circumferential distribution angle there is not less than 180 degrees to ensure uniform axial force distribution. Particularly when the two first retaining lugs 3-1 and the one second retaining lug are located on the same circumference, the two first retaining lugs 3-1 are at least arranged on the insertion part 1-2, and the lines connecting the second retaining lug 3-2 and the two first retaining lugs 3-1 define an acute triangle, thereby achieving a better force distribution effect.

In some embodiments, the female actuator 2-5 has a third retaining lug 3-3, when the male structure 1 is engaged with the female structure 2 and the valve element is in an open state, the female actuator 2-5, the male actuator 1-5 and the two first retaining lugs 3-1 are distributed in the circumferential direction to achieve uniform force distribution at four points. For better uniform distribution, it is preferred that the first guide entrance 2-6, which is used for the insertion of the second retaining lug 3-2 on the male actuator 1-5, on the female valve seat 2-8 is adjacent to the corresponding female actuator 2-5. Correspondingly, the second guide entrance 1-6, which is used for the insertion of the second retaining lug 3-2 on the female actuator 2-5, on the male valve seat 1-8 is adjacent to the corresponding male actuator 1-5. This arrangement ensures a more dispersed distribution.

In some embodiments, to facilitate a dispersed distribution, it is preferred that the male valve element 1-4 and the female valve element 2-4 are rotated by a preset angle to open, and the preset angle ranges from 70 degrees to 90 degrees, and is preferably 80 degrees. In other words, taking an insertion position as an initial position, after rotating by the preset angle, the male structure 1 and the female structure 2 are engaged with each other, and both the corresponding male valve element 1-4 and the corresponding male female valve element 2-4 are opened. The preset angle may alternatively be greater than 90 degrees or less than 70 degrees, such as 50 degrees or 180 degrees.

In some embodiments, it is preferable that an angle subtended by the second retaining lug 3-2 and the third retaining lug 3-3 with respect to the rotational axis ranges from 90 degrees to 100 degrees, whereas an angle subtended by the two first retaining lugs 3-1 with respect to the rotational axis is ranges from 125 degrees to 135 degrees, for example from 130 degrees to 132 degrees, to ensure sufficient span of the first retaining lugs 3-1 in the circumferential direction. It should be noted that for the convenience of understanding and description, the expression "angle subtended by two structures with respect to the rotational axis" may be simplified as the expression "angle subtended by two structures" in some descriptions. For instance, an angle subtended by the second retaining lug 3-2 and the first retaining lug 3-1 with respect to the rotational axis may be directly described as an angle subtended by the second retaining lug 3-2 and the first retaining lug 3-1. An angle subtended by the second retaining lug 3-2 and the nearest first retaining lug 3-1 may range from 62 degrees to 72 degrees, such as from 66 degrees to 69 degrees. Similarly, an angle subtended by the third shoulder 4 on the male structure 1, which is configured to engage with the third retaining lug 3-3, and its nearest first retaining lug 3-1 may range from 62 degrees to 72 degrees, such as from 66 degrees to 69 degrees. Specifically, the angle subtended by the second retaining lug 3-2 and its nearest first retaining lug 3-1 may be equal to the angle subtended by the third shoulder 4 and its nearest first retaining lug 3-1. This arrangement ensures that the second retaining lug 3-2, the third retaining lug 3-3 and the two first retaining lugs 3-1 are distributed in an isosceles trapezoid pattern when the male structure 1 and the female structure 2 are engaged with each other to achieve the open state.

In some embodiments, in view of dimensional limitation, it is preferred that an angle subtended by both ends of the first retaining lug 3-1 in the circumferential direction with respect to the rotational axis ranges from 28 degrees to 36 degrees, specifically for example, from 30 degrees to 34 degrees. To minimize the space occupied by the actuator, an angle subtended by both ends of each of the second retaining lug 3-2 and the third retaining lug 3-3 with respect to the rotational axis may range from 10 degrees to 18 degrees, such as from 12 degrees to 15 degrees.

In some embodiments, a circumferential width of the second retaining lug 3-2 is no less than one-third of a circumferential width of the first retaining lug 3-1, or no greater than two-thirds of the circumferential width of the second retaining lug 3-2. This ensures that the first retaining lug 3-1 has sufficient dimensional space and mechanical strength.

In some embodiments, it is preferred that an arcuate slot is provided at the recess bottom of the mating recess. The arcuate slot runs through the mating recess in the axial direction, enabling the actuator to be inserted into the arcuate slot and move along the arcuate slot to drive the internal valve element to rotate. An end of the corresponding arcuate slot is enlarged to form a guide entrance, facilitating the entry of the second retaining lug 3-2. Specifically, the second retaining lug 3-2 may abut against the recess bottom of the mating recess, enabling the recess bottom of the mating recess to serve as the second retaining shoulder 4 for bayonet engagement. It should be noted that when the diameter of the mating recess is equal to that of the assembly recess 2-2, it is necessary to provide an arcuate slot cavity at the recess bottom of the mating recess for the movement of the second retaining lug 3-2.

In some embodiments, for example, the male valve cover 1-82 has the insertion part 1-2 protruding on its mating side. One side of the insertion part 1-2 has an arc-shaped peripheral edge arranged coaxially with the rotational axis of the first retaining lug 3-1. The two first retaining lugs 3-1 are respectively arranged at both ends of the arc-shaped peripheral edge. The other side of the insertion part 1-2 is disposed toward the rotational axis of the first retaining lug 3-1 to yield a clearance space for avoiding the female actuator 2-5. Additionally, a top surface area of the insertion part 1-2 should be no less than the area required for the engagement of the two mating ports. In other words, when the male mating port 1-3 and the female mating port 2-3 are misaligned due to rotation, the female mating port 2-3 still remains in abutment with the top surface of the insertion part 1-2, allowing for at least the mounting of the figure-8-shaped sealing ring as mentioned above.

The male valve cover 1-82 includes a male cover part and the insertion part 1-2 arranged as a boss on the male cover part. An outer edge of the male cover part may extend to the second outer annular region 300 or be located within the first outer annular region 200. Since there is a clearance space on one side of the insertion part 1-2, the male cover part is formed with a male arcuate slot to facilitate the entry of the female actuator 2-5 and enable it to reach the male valve element 1-4. A male guide entrance is formed at an end of the male arcuate slot closer to the male actuator 1-5. The male guide entrance is positioned to align with the third retaining lug 3-3, and it may be located within the central region 100 or the first outer annular region 200. A male mating recess is formed on a side of the male cover part away from the insertion part 1-2 to accommodate the male valve element 1-4. Additionally, the male actuator 1-5 is fixed on the insertion part 1-2.

The female valve cover 2-82 includes a female cover part and an assembly part, and outer walls of the both are coaxial and matched with each other. The assembly part is formed with an assembly recess 2-2, which has a female arcuate slot to facilitate the entry of the male actuator 1-5 and enable it to reach the male valve element 1-4. A female guide entrance is formed at an end of the female arcuate slot close to the female actuator 2-5, and the female guide entrance is arranged to align with the second retaining lug 3-2, and it may be located within the central region 100 or the first outer annular region 200. A female mating recess 2-85 is formed on a side of the female cover part away from the assembly part to accommodate the female valve element 2-4. At the recess bottom of the assembly recess 2-2, not only the female mating port 2-3 is provided, but also, preferably, a mounting groove of a sealing ring is formed correspondingly. The female actuator 2-5 is connected to the recess bottom of the assembly recess 2-2, and preferably, connected to the recess wall of the assembly recess 2-2.

In some embodiments, a locking pin is further provided to lock the male structure 1 and the female structure 2 after they are engaged together, preventing relative movement between them and ensuring they remain in the mating state. The locking pin is configured to prevent relative rotation between the male structure 1 and the female structure 2 in such a way that it is typically connected to one of them in a sliding manner and inserted into an insertion hole in the other. Due to the eccentric arrangement, the relative rotation between the male structure 1 and the female structure 2 may be prevented. In the mating state, the locking pin may directly lock both the male valve seat 1-8 and the female valve seat 2-8 together, or it may directly lock only one valve seat and its associated valve element.

Based on the fluid connector provided in the above embodiments, a male structure for the fluid connector is further provided according to the present application, which is the male structure for the fluid connector described in any of the above embodiments. Specifically, the male structure for the fluid connector includes a male valve seat for mating with the female structure. The male valve seat is provided with an insertion part for fitting into an assembly recess of a female structure. The insertion part is provided on its outer side surface with a retaining lug protruding radially outward for rotational bayonet engagement with a corresponding retaining shoulder of the assembly recess. The insertion part is formed in its mating end face with a male mating port, which is configured to engage with a female mating port of the female structure. In other words, the retaining lug is arranged at the peripheral surface of the insertion part having the mating port. Since the male structure adopts the configuration in which the retaining lug is arranged at the peripheral surface of the insertion part as described in the above embodiments, the beneficial effects of the male structure may be referred to the above embodiments.

Based on the fluid connector provided in the above embodiments, a female structure for the fluid connector is further provided according to the present application, which is the female structure for the fluid connector described in any of the above embodiments. Specifically, the female structure for the fluid connector includes a female valve seat for mating with the male structure. The female valve seat is formed with an assembly recess for receiving the insertion part of the male structure. The assembly recess is provided on its recess wall with a retaining shoulder facing a recess bottom of the assembly recess for rotational bayonet engagement with a corresponding retaining lug of the insertion part. The assembly recess is provided at the recess bottom with a female mating port, which is configured to engage with the male mating port of the male structure. In other words, the recess wall of the assembly recess has the retaining shoulder facing the recess bottom of the assembly recess. Similarly, the retaining lug is arranged at the peripheral surface of the insertion part having the mating port. Since the female structure adopts the configuration in which the recess wall of the assembly recess has the retaining shoulder facing the recess bottom as described in the above embodiments, the beneficial effects of the female structure may be referred to the above embodiments.

The embodiments in the specification are described in a progressive manner, and each embodiment focuses on the difference from other embodiments. One embodiment may refer to other embodiments for the same or similar parts.

The above description of the disclosed embodiments enables those skilled in the art to implement or practice the present application. Various modifications to these embodiments are obvious to those skilled in the art, and the general principle defined herein may be implemented in other embodiments without departing from the spirit or scope of the present application. Therefore, the present application is not limited to the embodiments described herein, but should be defined by the broadest scope consistent with the principle and novel features disclosed herein.

## Claims

1. A fluid connector, comprising:
a male structure (1) having a male channel (1-1); and
a female structure (2) having a female channel (2-1), wherein
the male structure (1) and the female structure (2) form rotational bayonet engagement via retaining lugs (3) and retaining shoulders (4), the female structure (2) is provided on its mating side with an assembly recess (2-2), and the male structure (1) is provided on its mating side with an insertion part (1-2) configured to be inserted into the assembly recess (2-2) along a rotational axis of the retaining lug (3);
a male mating port (1-3) of the male channel (1-1) is provided at an end face of the insertion part (1-2), and a female mating port (2-3) of the female channel (2-1) is provided at a recess bottom of the assembly recess (2-2), and the male mating port (1-3) is configured to engage with the female mating port (2-3); and
the retaining lugs (3) comprise at least one first retaining lug (3-1) arranged at a peripheral portion of the insertion part (1-2), and the retaining shoulders (4) comprise at least one first retaining shoulder (4-1) arranged on a recess wall of the assembly recess (2-2) to cooperate with the first retaining lug (3-1).

2. The fluid connector according to claim 1, wherein the male structure (1) is provided with a male valve element (1-4) and a male actuator (1-5), and the female structure (2) is provided with a female valve element (2-4) and a female actuator (2-5); and
the male actuator (1-5) is configured to actuate the female valve element (2-4) to open or close the female channel (2-1) of the female structure (2) during rotational bayonet engagement, and the female actuator (2-5) is configured to actuate the male valve element (1-4) to open or close the male channel (1-1) of the male structure (1) during the rotational bayonet engagement.

3. The fluid connector according to claim 2, wherein the retaining lugs (3) comprise at least one second retaining lug (3-2) arranged on the male actuator (1-5), and the retaining shoulders (4) comprise at least one second shoulder arranged on the female structure (2) to cooperate with the second retaining lug (3-2); and/or
the retaining lugs (3) comprise at least one third retaining lug (3-3) arranged on the female actuator (2-5), and the retaining shoulders (4) comprise at least one third shoulder arranged on the male structure (1) to cooperate with the third retaining lug (3-3).

4. The fluid connector according to claim 3, wherein there are at least two first retaining lugs (3-1) arranged on the insertion part (1-2), and lines connecting the two first retaining lugs (3-1) and the second retaining lug (3-2) define an acute triangle.

5. The fluid connector according to claim 3, wherein the female structure (2) is provided with a first guide entrance (2-6) for guiding the second retaining lug (3-2) to move to the second shoulder, and the first guide entrance (2-6) is arranged adjacent to the female actuator (2-5); and
the male structure (1) is provided with a second guide entrance (1-6) for guiding the third retaining lug (3-3) to move to the third shoulder, and the second guide entrance (1-6) is arranged adjacent to the male actuator (1-5).

6. The fluid connector according to claim 3, wherein the male actuator (1-5) is arranged closer to a rotational axis of the first retaining lug (3-1) than the first retaining lug (3-1);
the female actuator (2-5) and the male actuator (1-5) are arranged at equal distances from the rotational axis of the first retaining lug (3-1); and
a clearance zone (1-9) and a male clearance slot (1-7) are provided at a side of the insertion part (1-2) to allow movement of the female actuator (2-5), and a female clearance slot (2-7) is provided at the recess bottom of the assembly recess (2-2) to allow movement of the male actuator (1-5).

7. The fluid connector according to claim 6, wherein the male structure (1) comprises a male valve seat (1-8), the male valve element (1-4) is rotatably arranged at the male valve seat (1-8), and the male valve seat (1-8) comprises the insertion part (1-2) and the male actuator (1-5); and
the female structure (2) comprises a female valve seat (2-8), the female valve element (2-4) is rotatably arranged at the female valve seat (2-8), and the female valve seat (2-8) comprises the assembly recess (2-2) and the female actuator (2-5).

8. The fluid connector according to claim 7, wherein the male valve seat (1-8) comprises a male body (1-81) and a male valve cover (1-82), the male valve element (1-4) is arranged between the male valve cover (1-82) and the male body (1-81), and the male body (1-81) and the male valve cover (1-82) are engaged with each other and positioned circumferentially by a male positioning protrusion (1-83) and a male positioning groove; and
the female valve seat (2-8) comprises a female body (2-81) and a female valve cover (2-82), the female valve element (2-4) is arranged between the female valve cover (2-82) and the female body (2-81), and the female body (2-81) and the female valve cover (2-82) are engaged with each other and positioned circumferentially by a female positioning protrusion (2-83) and a female positioning groove (2-84).

9. The fluid connector according to claim 8, wherein the male valve element (1-4) is positioned adjacent to the male positioning protrusion (1-83) at its peripheral surface; and
the female valve element (2-4) is positioned adjacent to the female positioning protrusion (2-83) at its peripheral surface.

10. The fluid connector according to claim 9, wherein the male valve cover (1-82) has a male mating recess, the male positioning groove is provided in a recess wall of the male mating recess and extends to an end face of the male valve cover (1-82), the male valve element (1-4) is fitted into the male mating recess, the male body has a male boss (1-86) received in the male mating recess, and the male positioning protrusion (1-83) is arranged to axially protrude beyond the male boss (1-86); and
the female valve cover (2-82) has a female mating recess (2-85), the female positioning groove (2-84) is provided in a recess wall of the female mating recess (2-85) and extends to an end face of the female valve cover (2-82), the female valve element (2-4) is fitted into the female mating recess (2-85), the female body (2-81) has a female boss (2-86) received in the female mating recess (2-85), and the female positioning protrusion (2-83) is arranged to axially protrude beyond the female boss (2-86).

11. The fluid connector according to claim 10, wherein the male valve element (1-4) has a male mounting groove (1-41) at each of its two end faces to receive a sealing ring, and each male mounting groove (1-41) is open at the peripheral surface of the male valve element (1-4); and
the female valve element (2-4) has a female mounting groove (2-41) at each of its two end faces to receive a sealing ring, and each female mounting groove (2-41) is open at the peripheral surface of the male valve element (2-4).

12. The fluid connector according to claim 11, wherein the assembly recess (2-2) and the female mating recess (2-85) are located at opposite ends of the female valve cover (2-82);
an arc-shaped retaining groove (2-9) is provided in the recess wall of the assembly recess (2-2), and a side groove wall surface of the arc-shaped retaining groove away from the recess bottom of the assembly recess (2-2) serves as the first retaining shoulder (4-1);
a guide groove (2-10) is provided in the recess wall of the assembly recess (2-2) to guide the first retaining lug (3-1) into the arc-shaped retaining groove (2-9); and
the female clearance slot (2-7) is provided at the recess bottom of the assembly recess (2-2) to extend to the female mating recess (2-85), and the female clearance slot (2-7) is arcuate.

13. The fluid connector according to claim 12, wherein the insertion part (1-2) and the male mating recess are located at opposite ends of the male valve cover (1-82);
the male clearance slot (1-7) extends through the recess bottom of the male mating recess to a side where the insertion part (1-2) is located, and the male clearance slot (1-7) is arcuate; and
the male clearance slot (1-7) and the insertion part (1-2) are arranged side-by-side transversely, the clearance zone (1-9) is provided at a side of the insertion part (1-2) so as to allow the female actuator (1-5) to extend into the male clearance slot (1-7).

14. A male structure for a fluid connector, comprising a male valve seat (1-8) for mating with a female structure (2), wherein
the male valve seat (1-8) is provided with an insertion part (1-2) for fitting into an assembly recess (2-2) of the female structure (2);
the insertion part (1-2) is provided on its outer side surface with a retaining lug (3), which protrudes radially outward for rotational bayonet engagement with a corresponding retaining shoulder (4) located on the assembly recess (2-2); and
the insertion part (1-2) is provided in its mating end face with a male mating port (1-3), which is configured to engage with a female mating port (2-3) of the female structure (2).

15. A female structure for a fluid connector, comprising a female valve seat (2-8) for mating with a male structure (1), wherein
the female valve seat (2-8) is provided with an assembly recess (2-2) for receiving an insertion part (1-2) of the male structure (1);
the assembly recess (2-2) is provided on its recess wall with a retaining shoulder (4), which faces a recess bottom of the assembly recess (2-2) for rotational bayonet engagement with a corresponding retaining lug (3) of the insertion part (1-2); and
the assembly recess (2-2) is provided at the recess bottom with a female mating port (2-3), which is configured to engage with a male mating port (1-3) of the male structure (1).
